# EUROPÄISCHE PATENTSCHRIFT

(11) **EP 1 744 196 B1**
(45) Veröffentlichungstag und Bekanntmachung des Hinweises auf die Patenterteilung: **29.02.2012**
(21) Anmeldenummer: 05106495.4
(22) Anmeldetag: 14.07.2005
(51) Int. Cl.: G02B 23/18, G02B 23/12, G01S 17/08, H04N 5/232

(54) **Multifunktions-Beobachtungsgerät**
Multifunctional observation device
Dispositif d'observation multifonctionnel

(43) Veröffentlichungstag der Anmeldung: 17.01.2007
(73) Patentinhaber: Vectronix AG, 9435 Heerbrugg (CH)
(72) Erfinder: ZADRAVEC, Dusan, CH-9445, Rebstein (CH)
(74) Vertreter: Kaminski Harmann

(56) Entgegenhaltungen:
- RU-C1- 2 158 433
- US-A- 3 712 702
- US-A- 4 629 295
- US-A- 5 621 567
- US-A1- 2002 041 438
- US-A1- 2003 002 149
- US-A1- 2004 046 953
- US-A1- 2004 095 471
- PATENT ABSTRACTS OF JAPAN Bd. 1999, Nr. 08, 30. Juni 1999 (1999-06-30) & JP 11 064741 A (ASAHI OPTICAL CO LTD), 5. März 1999 (1999-03-05)
- PATENT ABSTRACTS OF JAPAN Bd. 014, Nr. 025 (P-991), 18. Januar 1990 (1990-01-18) & JP 01 266505 A (NEC CORP), 24. Oktober 1989 (1989-10-24)

## Beschreibung

Die Erfindung betrifft ein Multifunktions-Beobachtungsgerät nach dem Oberbegriff des Anspruchs 1.

Als Beobachtungsgeräte bekannt sind verschiedenste Instrumente für z.B. militärische oder geodätische Zwecke. Im Allgemeinen weisen derartige Geräte weitere Funktionen zusätzlich zur Beobachtungsfunktion auf, so z.B. Zielmarken für militärische Anwendungen oder zu Jagdzwecken, integrierte Entfernungs- und Richtungsmesser, etc. Nachdem für viele Einsätze die Instrumente möglichst leicht, kompakt und handlich sein sollen, sind diese Instrumente oft in Form von Ferngläsern/Feldstechern mit Spezialfunktionen für jeweilige spezielle Verwendungszwecke ausgebildet. Für eine Mission werden oft unterschiedliche Spezialgeräte benötigt. So kann es vorkommen, dass ein Anwender mehrere Geräte mit sich tragen muss, was insbesondere bei militärischen Einsätzen unerwünscht ist. Vorteilhaft wäre ein Beobachtungsgerät, welches für mehrere Anwendungen einsetzbar ist, insbesondere auch für zwei oder mehr Anwendungen gleichzeitig einsetzbar ist, ohne an Kompaktheit und Handlichkeit zu verlieren.

Es ist die Aufgabe der vorliegenden Erfindung, ein multifunktionales Beobachtungsgerät ohne erhebliche Erhöhung von optischer Komplexität, Volumen und Gewicht und ohne wesentlichen Eingriff in das und damit Veränderung des optischen Basis-Systems bereitzustellen.

Diese Aufgabe wird erfindungsgemäss durch die Verwirklichung der kennzeichnenden Merkmale des Anspruchs 1 bzw. der abhängigen Ansprüche gelöst oder die Lösungen weitergebildet.
Die Erfindung stellt ein Beobachtungsgerät, insbesondere ein Tag-Nachtsichtgerät, welches zusätzlich zur Beobachtungs-Funktion mit weiteren Funktionen ausstattbar ist, bereit. Die Bezeichnung Beobachtungsgerät schliesst nicht aus, dass das Gerät auch Messfunktionalitäten aufweisen kann. Erfindungsgemäss ist das Beobachtungsgerät derartig aufgebaut, dass ein modulartiges Aufrüsten des Gerätes ermöglicht wird. Insbesondere können optische Module einfach in das Gerät eingefügt, z.B. hineingeschoben oder -gesteckt, werden. Das Gerät und die optischen Module sind so ausgebildet, dass bereits vorhandene optische Bauteile des Beobachtungsgeräts auch für die eingefügten Module verwendbar sind. Eine derartige Integration mehrerer Funktionen in ein Gerät unter Verwendung bereits vorhandener Elemente spart unter anderem Volumen und Gewicht ein und ermöglicht die Bereitstellung eines leichten und handlichen Geräts. Insbesondere hat ein erfindungsgemässes Beobachtungsgerät die Handlichkeit eines Feldstechers.

Als Beobachtungsgerät mit erfindungsgemässer modulartiger Aufrüstungsmöglichkeit kann ein handelsübliches Instrument ausgebildet werden, z.B. ein binokularer Feldstecher. Insbesondere sind auch Hochleistungs-Messferngläser, wie die der Vektor Serie der Firma Vectronix AG aus der Schweiz/Heerbrugg, erfindungsgemäss auf- bzw. ausrüstbar. In die Ferngläser der Vektor Serie sind bereits als Basisausstattung Laserentfernungsmesser, digitaler Kompass und Neigungsmesser integriert.

Der Auf- oder Ausrüstungsgrad kann an den jeweiligen Verwendungszweck angepasst werden. Allgemein können beliebige optische Beobachtungs- oder Messgeräte erfindungsgemäss mit Modulen ausgestattet werden, Voraussetzung ist die geeignete Ausbildung und Anordnung der optischen Komponenten im Gerät. So ist erfindungsgemäss vorgesehen, wenigstens ein optisches Umlenkmittel eines Beobachtungs- und/oder Messinstruments derart auszunutzen, bzw. auszubilden und anzuordnen, dass über das Umlenkmittel Sende- und/oder Empfangsstrahlen optischer Zusatz-Module ein- und/oder ausspiegelbar sind. Die Zusatz-Module sind als externe Module ausgebildet und erfindungsgemäss in das Gerät einsetzbar. Im Zusammenhang mit den Modulen werden als Sendestrahlen optische Strahlen bezeichnet, die von einem Modul, wie z.B. einem Lasersender oder einem graphischen Display, ausgehen/ausgesandt werden, und als Empfangsstrahlen Strahlen, die von einem Modul, wie z.B. einer Kamera, empfangen werden.

Bei einem binokularen Fernrohr mit zwei Fernrohroptiken sind insbesondere zwei Umlenkmittel erfindungsgemäss einsetzbar. Unter Umlenkmitteln werden optische Elemente zur Änderung der Richtung optischer Strahlen verstanden, wie Spiegel oder Prismen. Die Umlenkmittel können selbstverständlich auch als Strahlteiler ausgebildet sein, insbesondere auch ein- oder beidseitig beschichtet, oder mit vor- oder nachgeschalteten Filtern, allgemein sind optische reflektive und/oder refraktive Einheiten geeignet, mittels derer optische Strahlen in Beobachtungskanäle des Beobachtungsgeräts einspiegelbar und/oder aus denselben ausspiegelbar sind. Unter Beobachtungskanal des Beobachtungsgeräts ist der optische Strahlengang zwischen Objektiv- und Okulareinheit des Geräts zu verstehen. Als erster Beobachtungskanal wird der optische Strahlengang zwischen erster Objektiveinheit und erster Okulareinheit bezeichnet, als zweiter Beobachtungskanal der optische Strahlengang zwischen zweiter Objektiveinheit und zweiter Okulareinheit. Ist das Beobachtungsgerät als Tag-Nachtsichtgerät ausgebildet, ist zwischen erstem und zweitem Beobachtungskanal ein Verstärkerkanal mit einem Lichtverstärker, insbesondere Restlichtverstärker, zur Verstärkung von Nachtsicht-Beobachtungsstrahlen in bekannter Art und Weise vorgesehen. Wenn von Umlenkmitteln die Rede ist, kann die Beschreibung ebenso auf ein einziges Umlenkmittel übertragen werden und vice versa.

Die Umlenkmittel sind so ausgebildet, dass ihre Position bzw. Stellung im Gerät einstellbar ist, insbesondere sind die Umlenkmittel in die und aus den Beobachtungskanäle/n positionierbar, z.B. aus- und einklappbar. Ein Aufbau eines Tag-Nachtsichtgeräts mit aus- und einklappbaren Umlenkspiegeln, sowie der Aus- und Einklappmechanismus derselben ist beispielsweise in der EP 0 469 942 beschrieben.

Mit zwei positionierbaren Umlenkmitteln in einem binokularen Beobachtungsgerät kann die Funktionalität desselben weiter erhöht werden. Beispielsweise ist ein binokulares Beobachtungs- und/oder Messfernrohr derart ausgebildet, dass bei eingeklappten Umlenkmitteln, d.h. die Umlenkmittel sind nicht im jeweiligen Beobachtungskanal des Fernrohrs positioniert, das Fernrohr als Tagsicht-Gerät verwendbar und über beide Fernrohroptiken eine Beobachtung möglich ist. Bei einem Fernrohr wie der Vektor Serie ist mit dem Fernrohr zusätzlich zur visuellen Beobachtung eine Entfernungs- und Richtungsbestimmung möglich, deren Anzeigewerte ausserdem in den Strahlengang zum Okular einspiegelbar sind.

Bei eingeklappten Umlenkmitteln - in einer möglichen Ausführungsform als klappbare Spiegel ausgebildet - ist also eine ungestörte zweiäugige Beobachtung gegeben. Wird nun ein Umlenkmittel in den ersten Beobachtungskanals bewegt, so können über dieses Umlenkmittel Strahlen eines in das Gerät eingesetzten optischen Moduls gelenkt werden, während im zweiten Beobachtungskanal die visuelle Beobachtung ungestört weiter fortgesetzt werden kann.

Ein optisches Modul kann z.B. ein, insbesondere graphisches, Display sein. Auf das Display können Bilder, z.B. mittels einer Wärmebild- oder CCD-Kamera aufgenommene Bilder, eingespielt werden - beispielsweise über eine Kabelverbindung oder eine kabellose Verbindung, wie Funk oder Bluetooth. Über das Umlenkmittel ist das Bild des Displays dann in einen Beobachtungskanal des Beobachtungsgeräts und weiter zur Okulareinheit lenkbar. So kann mit einem Auge die Umgebung oder ein Objekt, etc. als Beobachtungsbild beobachtet werden, und mit dem anderen Auge ein zusätzliches Modul-Bild, z.B. eine Kameraaufnahme. Liefert das auf das Display eingespielte Bild Orientierungsinformation, beispielsweise in Form einer Karte, oder enthält das optische Modul eingespeicherte Umgebungsinformation, z.B. Referenzpunkte des zu erkundenden Geländes zur Selbst-Orientierung, so kann ein Beobachter Positionsinformation schnell und sicher abrufen, auch ohne auf einen ungestörten Satellitenempfang für ein GPS angewiesen zu sein. Ebenso ist jedoch bei mit einem Modul gekoppelten GPS das Einspielen von GPS-Orientierungsinformation zum Beobachter möglich, bzw. ist gegebenenfalls ein als Satelliten-Empfänger ausgebildetes Modul erfindungsgemäss in das Gerät einsetzbar. Mit einer einprojizierten Umgebungs-Karte als Modul-Bild wird dem Beobachter eine bessere Orientierung ermöglicht. Vorteilhaft ist die Information sehr einfach und schnell - beispielsweise durch Knopfdruck - abrufbar, ohne dass die visuelle Beobachtung unterbrochen werden muss. Weiter vorteilhaft sind die optischen Parameter bei der Bildprojektion und die Abbildungseigenschaften der Bilder so angeglichen, dass das eingespielte Modul-Bild und das Beobachtungsbild denselben Abbildungsmassstab haben und so vom Beobachter ein überlagertes oder fusioniertes Bild von eingespieltem Modul-Bild und Beobachtungsbild beobachtbar ist. Werden Bilder von beispielsweise einer CCD- oder Wärmebildkamera auf das Display eingespielt und dem Beobachter weiters gemeinsam mit einem Beobachtungsbild verfügbar gemacht, erfolgt eine Kopplung von CCD- oder Wärmebildkamera mit dem Gerät insbesondere derart, dass die optische Achsen von Kamera und Gerät in dieselbe Richtung zeigen.

Das erfindungsgemässe Beobachtungsgerät ist in einer Ausführungsform derart aufgebaut, dass über ein zweites Umlenkmittel im zweiten Beobachtungskanal Sendestrahlen eines zweiten optischen Moduls in den zweiten Beobachtungskanal und zum zweiten Okular einspiegelbar sind. Im ersten Beobachtungskanal sind Sendestrahlen eines ersten optischen Moduls über ein erstes Umlenkmittel und die erste Objektiveinheit des ersten Beobachtungskanals aus dem Gerät ausspiegelbar, und/oder es sind über die erste Objektiveinheit in den ersten Beobachtungskanal projizierte Empfangsstrahlen mittels des ersten Umlenkmittels aus dem ersten Beobachtungskanal zum ersten optischen Modul ausspiegelbar. Zum ersten optischen Modul ausgespiegelte Strahlenbündel können photographischen oder, z.B. CCD-/CMOS-, Kamera-Aufnahmen dienen. Aus dem Gerät ausspiegelbar sind beispielsweise Laserstrahlen eines Lasersenders, wie eines sichtbaren Lasers oder eines pulsierenden IR-Lasers (als erstes optisches Modul), insbesondere zum kodierten oder nicht-kodierten Beleuchten der beobachteten Szene. Ebenso ist das erste Modul als Laserentfernungsmesser (mit Sender und Empfänger) ausbildbar, wobei Strahlen zur Entfernungsmessung über das erste Umlenkmittel und die erste Objektiveinheit gegen ein Objekt lenkbar, und vom Objekt reflektierte Strahlen wiederum über die erste Objektiveinheit und das erste Umlenkmittel zum Entfernungsmesser führbar sind. Die Umlenkmittel können bei Tagsicht-Beobachtung abwechselnd (bzw. je nach Verwendungszweck) aus- oder eingeklappt werden.

Vorzugsweise sind die Umlenkmittel mit einer Beschichtung, wie einer dielektrischen Schicht, versehen, bzw. auch beidseitig beschichtet. Mit entsprechender/n Beschichtung/en ist sogar eine zweiäugige Beobachtung einer Szene zusammen mit der Betrachtung eines Modul-Bilds durchführbar. Dem Fachmann ist klar, wie und durch welche Beschichtungen die Reflektivität und/oder Transmittivität von optischen Komponenten veränderbar ist, und damit wie und welche Beschichtungen den jeweiligen Anwendungen bzw. Modulen entsprechend einsetzbar sind. Deshalb werden Beschichtungs-Techniken und -Materialien und die dadurch erreichbare erweiterte Funktionalität des Geräts an dieser Stelle nicht weiter erläutert.

Bei Nachtsicht-Beobachtung sind in einer Ausführungsform beide Umlenkmittel im jeweiligen Beobachtungskanals positioniert. Einfallendes Licht wird im zweiten Beobachtungskanal über das zweite Umlenkmittel in den Verstärkerkanal und auf das Einfallsfenster eines Restlichtverstärkers gelenkt, tritt als verstärktes Bild durch den Ausgang des Restlichtverstärkers und wird über das erste Umlenkmittel in den ersten Beobachtungskanal und zum ersten Okulars gelenkt und ins Auge des Beobachters projiziert. Das erste und zweite Umlenkmittel sind also sozusagen "aktiv" und können in den bereits beschriebenen Funktionen verwendet werden. Insbesondere ist bei Nacht-Beobachtung Wärmebildinformation vorteilhaft, welche mittels des zweiten Umlenkmittels über das zweite - bei Nacht-Beobachtung ohnehin nicht "aktive" - Okular ins Auge des Beobachters projizierbar ist. Die Ausführungen mit den Bezeichnungen "erste" und "zweite" Komponenten sind rein beispielhaft zur besseren Anschaulichkeit so gewählt, es versteht sich, dass "erste" Komponenten genauso als "zweite" Komponenten bezeichnet werden können und vice versa.

Erfindungsgemäss ist also ein Beobachtungsgerät mit vielfältigen Funktionen ausstattbar, ohne dass ein wesentlicher Eingriff ins optische "Basis-System" des Beobachtungsgeräts erforderlich ist, ein "Basis-Gerät" kann also sozusagen erfindungsgemäss aufgerüstet werden. Das Basis-System bleibt im Wesentlichen unverändert, die Zusatz-Funktionen sind als Module in das Gerät integrierbar und aus diesem entnehmbar und austauschbar. Der Anwender hat also die Möglichkeit, anstelle mehrerer gerätehafter Ausrüstungsgegenstände, ein einziges Gerät - insbesondere in Form eines Feldstechers - und zusätzliche vorteilhafte optische Ausrüstungsgegenstände in Form handlicher und leichter Module mit sich zu tragen.

Das erfindungsgemässe Multifunktions-Beobachtungsgerät wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1A: eine mögliche Ausführungsform eines erfindungsgemässen Beobachtungsgeräts mit optischen Modulen in teilweiser Draufsicht,
- Fig. 1B: die Ausführungsform aus Fig. 1A in Vorderansicht und teilweiser Draufsicht,
- Fig. 1C: ein erfindungsgemässes Beobachtungsgerät in Kombination mit einem Stativ und zusätzlichen Mess-, Datenverarbeitungs- und Steuereinrichtungen,
- Fig. 1D: das Beobachtungsgerät aus Fig. 1A mit einem Lasersende-Modul beim Beleuchten,
- Fig. 2A: schematisch den optischen Aufbau einer Ausführungsform eines erfindungsgemässen Beobachtungsgeräts in Nachtsicht-Stellung mit einem ersten und zweiten optischen Modul,
- Fig. 2B: den Aufbau aus Fig. 2A mit einem anders ausgebildeten ersten optischen Modul,

- Fig. 3A: schematisch den optischen Aufbau des erfindungsgemässen Beobachtungsgeräts aus Fig. 2A mit dem ersten und zweiten optischen Modul in Tagsicht-Stellung zur zweiäugigen Beobachtung,
- Fig. 3B: den Aufbau aus Fig. 3A zur einäugigen Beobachtung mit ausgeklapptem zweitem Umlenkmittel zur "Aktivierung" des zweiten optischen Moduls,
- Fig. 3C: den Aufbau aus Fig. 3A zur einäugigen Beobachtung mit ausgeklapptem erstem Umlenkmittel zur "Aktivierung" des ersten optischen Moduls, und
- Fig. 3D: schematisch den optischen Aufbau einer Ausführungsform eines erfindungsgemässen Beobachtungsgeräts mit ausgeklapptem erstem und zweitem Umlenkmittel.

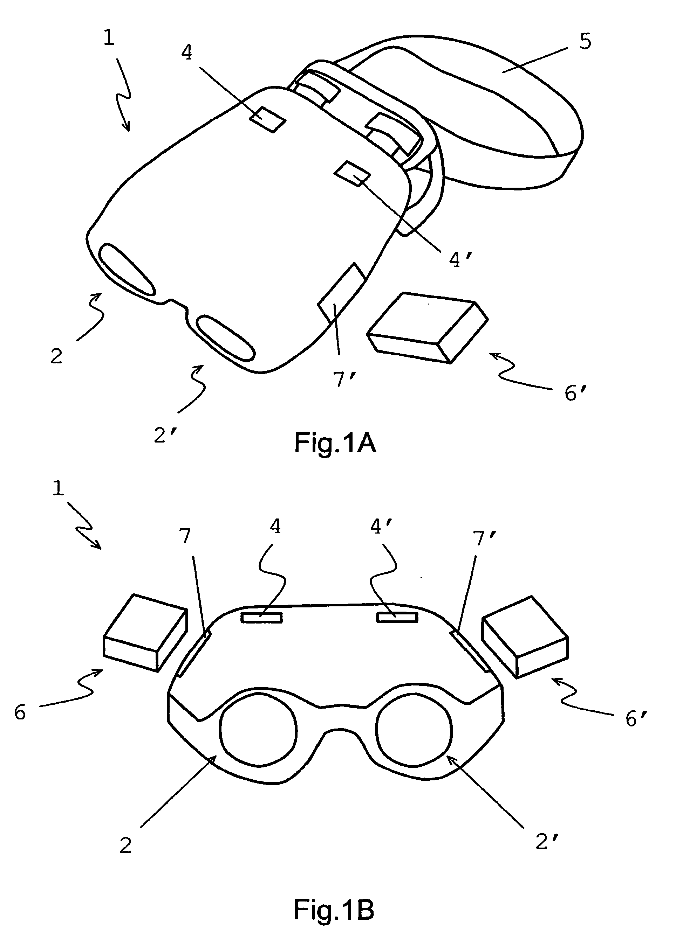

Fig. 1A zeigt eine mögliche Ausführungsform eines erfindungsgemässen Beobachtungsgerätes. Das Beobachtungsgerät ist hier als binokulares Fernglas 1 ausgeführt, etwa in der Art eines Fernglases der Vektor Serie. Erfindungsgemäss ist das Fernrohr so ausgebildet, dass optische Module integrierbar sind. Bei dem hier dargestellten binokularen Fernglas 1 mit zwei Fernrohroptiken 2,2' ist jeder Optik jeweils ein Modul zuordenbar, in der Ansicht von Fig. 1A ist nur das zweite Modul 6' sichtbar. Zur Integration des zweiten Moduls 6' in das Fernglas 1 ist eine zweite Modul-Öffnung 7' am Gerät vorgesehen, in welche das zweite Modul 6' einfach hineingesteckt, -geschoben, oder "-geklickt" werden kann. In der Darstellung ist das zweite Modul 6' schematisch als Quader gezeichnet. Nachdem die Module jeweils mit einer - teils hochkomplexen - Optik ausgebildet sind, werden im Allgemeinen Gehäuse für die Module vorgesehen werden. Die Module sind dann z.B. einfach aus dem Gehäuse entnehmbar und in das Fernglas 1 einsetzbar - die Öffnung am Fernglas 1 kann einen Deckel aufweisen, wie beispielsweise für ein Batteriegehäuse. Es ist ersichtlich, dass trotz der erfindungsgemässen Aufrüstung des Fernglases 1 dieses ein kompaktes Gerät zum einfachen Mittragen bzw. Umhängen mittels eines Gurtes 5 darstellt. Auch ist das Gerät handlich und übersichtlich zu bedienen - mittels einer zweiten und ersten Taste 4',4 sind Funktionen des zweiten Moduls 6' und eines in dieser Ansicht nicht sichtbaren ersten Moduls aktivierbar bzw. deaktivierbar.

In Fig. 1B ist das Fernglas 1 von Fig. 1A dargestellt. In dieser Darstellung sind die erste Modul-Öffnung 7 und das erste Modul 6 erkennbar. Die Module werden rechts und links seitlich in das Fernglas 1 eingeschoben. Ebenso könnte das Fernglas 1 an seiner Ober- oder Unterseite die Öffnungen für die Module aufweisen. Mittels der beiden Tasten 4,4' werden Funktionen der Module aktiviert bzw. deaktiviert, z.B. indem bei Betätigung der jeweiligen ersten oder zweiten Taste 4,4' ein Sender oder Empfänger als Modul ein- oder ausgeschaltet wird. Zur Aktivierung der Module müssen jeweils eine erste oder zweite optische Komponente des Fernglases 1 entsprechend positioniert werden. So wird - beispielsweise mechanisch - ein erstes Umlenkmittel derart positioniert, dass das erste optische Modul 6 in seiner Funktion verwendbar wird. Dasselbe gilt für die zweite optische Komponente und das zweite optische Modul 6'. Mit dem Einbau kleiner Motoren können die entsprechenden optischen Komponenten auch elektronisch positioniert werden.

Die Module können unterschiedliche Funktionen haben, sie sind auch gegen andere weitere Module austauschbar. Beispielsweise kann das zweite Modul 6' als graphisches Display ausgebildet sein, dessen Bild über die zweite optische Komponente - das zweite Umlenkmittel - zum Beobachter lenkbar ist. Das erste Modul 6 kann einen Lasersender - z.B. zum Beleuchten einer Szene - darstellen. Ebenso können die Module als CCD- oder Wärmebildkamera ausgebildet sein. Es versteht sich, dass für eine integrierte Wärmebildkamera entsprechende optische Elemente des Geräts als für Wärmestrahlung durchlässig auszubilden sind. Auch sind - gegebenenfalls hinsichtlich weiterer oder zusätzlicher Bedienfunktionen einsetzbarer Module - weitere Tasten/Bedienknöpfe am Beobachtungsgerät vorsehbar. So sind im Falle einer erfindungsgemässen Ausbildung eines Hochleistungsfernglases der Leica Vektor Serie am Fernglas Tasten für eine Entfernungs- und Richtungsmessung vorhanden.

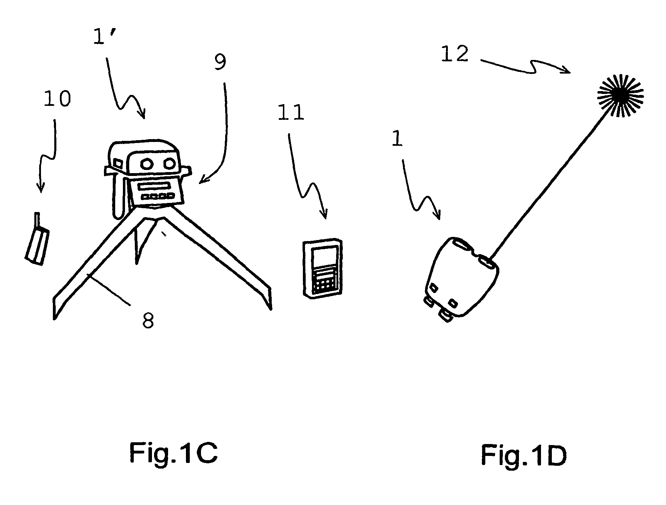

In Fig. 1C ist ein erfindungsgemässes Beobachtungsgerät als Teleskop 1' in einer Ausführungsform zur nichthandgehaltenen Verwendung mit Zubehör gezeigt. Das Teleskop 1' ist auf einem amagnetischen Stativ 8 montiert, wobei dem Stativ 8 Einrichtungen zur Winkeleinstellung und -messung und eine Recheneinrichtung 9 mit optionaler Software zugeordnet sind. Die Recheneinrichtung 9 kann auch mit externen Einheiten, wie einem GPS 10 oder einer Steuereinheit 11 kommunizieren. In der Recheneinrichtung 9 sind weiters Korrekturtabellen zur Steigerung der Genauigkeit beim Auswerten von Messungen speicherbar.

Das Fernglas 1 aus Fig. 1A, 1B als erfindungsgemässes Beobachtungsgerät beim Aussenden eines Lasersignals 12 ist in Fig. 1D gezeigt. Das erste Modul 6 aus Fig. 1B ist hier als Lasersender ausgeführt.

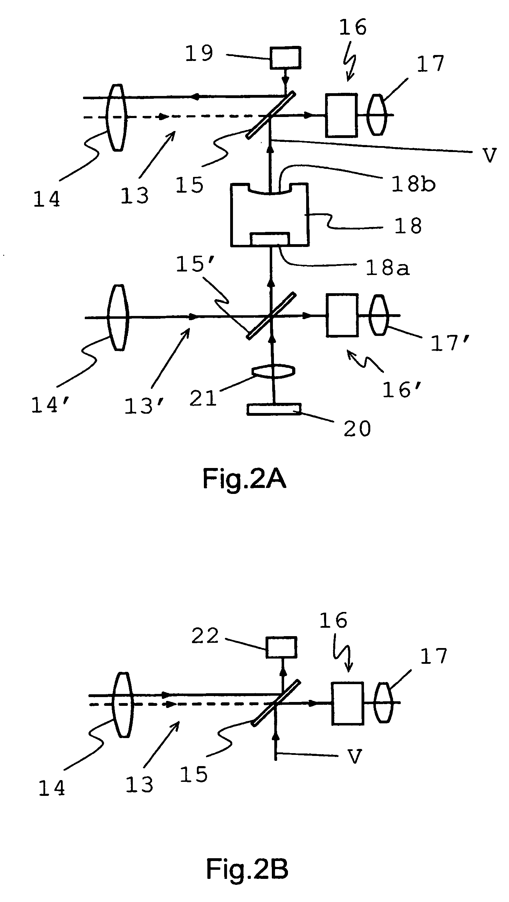

Aus Fig. 2A ist das Prinzip eines erfindungsgemässen Beobachtungsgeräts mit Modulen zu entnehmen. Ein möglicher Aufbau mit optischen Bauteilen und erfindungsgemäss integrierten optischen Modulen ist schematisch skizziert. Objektiv-, Umkehr- und Okulareinheiten 14,14',16,16',17,17' sind in den Figuren 2A-3D symbolisch durch eine Linse bzw. ein Prisma dargestellt, werden aber im Allgemeinen aus einem Linsen- oder Prismensystem bzw. aus optischen Baugruppen gebildet sein. Auch die Grösse der dargestellten Bauformen ist rein beispielhaft. Die optische Anordnung ist insbesondere in einem Gehäuse wie in den Figuren 1A-1D dargestellt, angeordnet.

In Fig. 2A ist das Beobachtungsgerät in Nachtsicht-Stellung gezeigt. Jeweils ein Umlenkspiegel 15,15' als Umlenkmittel ist in "aktiver" Stellung jeweils im ersten und zweiten Beobachtungskanal 13,13' positioniert. Der erste und zweite Beobachtungskanal 13,13' ist jeweils als optischer Strahlengang zwischen erster und zweiter Objektiveinheit 14,14' und erster und zweiter Okulareinheit 17,17' definiert. In Nachtsicht-Stellung werden in diesem Ausführungsbeispiel nur im zweiten Beobachtungskanal 13' empfangene optische Strahlen als Bilder beobachtet. Bei entsprechend durchlässig bzw. teildurchlässig ausgebildetem erstem Umlenkmittel wäre auch über den ersten Beobachtungskanal 13 eine Beobachtung möglich. Die zweite Objektiveinheit 14' fokussiert die von einem zu beobachtenden Objekt/Umgebung ausgehenden Strahlen auf den zweiten Umlenkspiegel 15', mittels des zweiten Umlenkspiegels 15' werden die Strahlen in einen Verstärkerkanal V und auf das Eintrittsfenster 18a eines Restlichtverstärkers 18 gelenkt. Im Restlichtverstärker 18 wird das Bild des Objektes/der Umgebung elektronisch verstärkt, erscheint dadurch als helleres sichtbares Bild auf dem Austrittsfenster 18b und wird mittels des ersten Umlenkmittels 15 in den ersten Beobachtungskanal 13, und über ein Bildumkehrsystem und die erste Okulareinheit 17 ins Auge eines Beobachters projiziert. Durch die aktive Stellung des ersten und zweiten Umlenkspiegels 15,15' können nun weitere optische Strahlen im Gerät ein- und ausgespiegelt werden. Erfindungsgemäss in das Gerät eingesetzte Module sind hier als graphisches Display 20 und als Lasersender 19 ausgebildet. Das graphische Display 20 als zweites Modul spielt ein Bild über den zweiten Umlenkspiegel 15' und die zweite Umkehr- und Okulareinheit 16',17' zum Beobachter. Dem graphischen Display 20 ist noch ein Linsensystem 21 zur Abbildung des Display-Bildes (als Modul-Bild) im zweiten Okular zugeordnet. Das vom graphischen Display 20 übermittelte Bild kann beispielsweise ein von einer Wärmebildkamera aufgenommenes, auf das Display eingespeistes Bild sein, oder auch Standortinformation - z.B. in Form einer Karte. Ebenso könnten mittels eines GPS empfangene Ortskoordinaten auf das Display und zum Beobachter gespielt werden. Das erste optische Modul ist als Lasersender 19 zum Aussenden von Sendestrahlen ausgebildet. Über den ersten Umlenkspiegel 15 wird Laserstrahlung im ersten Beobachtungskanal 13 zur ersten Objektiveinheit 14 und über diese aus dem Beobachtungsgerät geleitet. So kann ein Anwender die beobachtete Szene/das beobachtete Objekt mit einem mehr oder weniger fokussierten Laserstrahl beleuchten. Gestrichelt gezeichnete Linien in den Figuren 2A-3D stellen optische Strahlen dar, die - in den jeweiligen Darstellungen - nicht zum Beobachter gelangen.

Fig. 2B zeigt - teilweise - den "Basisaufbau" von Fig. 2A, nur ist anstelle des Lasersenders eine Kamera 22, wie eine CCD-Kamera, als erstes optisches Modul in das erfindungsgemässe Beobachtungsgerät eingesetzt. Über die erste Objektiveinheit 14 empfangene Strahlen werden als Empfangsstrahlen über den ersten Umlenkspiegel 15 zur Kamera 22 gelenkt und als Bild aufgenommen. Aus den Fig. 2A und 2B ist ersichtlich, dass erfindungsgemäss eine ungestörte (einäugige) visuelle Beobachtung eines Objekts und/oder einer Umgebung stattfinden kann und dazu die Aufnahme und/oder Weitergabe von Zusatzinformation ermöglicht wird. Insbesondere kann die Aufnahme und/oder Weitergabe von Zusatzinformation stattfinden, ohne dass die visuelle Beobachtung unterbrochen werden muss. In der Ausbildung von Fig. 2A und 2B sind mit dem erfindungsgemässen Gerät drei Funktionen gleichzeitig ausführbar. Weiter vorteilhaft ist die gemeinsame Optik für Beobachtung und Modul-Sende- und/oder Empfangsstrahlen. So wird das System vereinfacht und von überflüssigem Glasgewicht freigehalten.

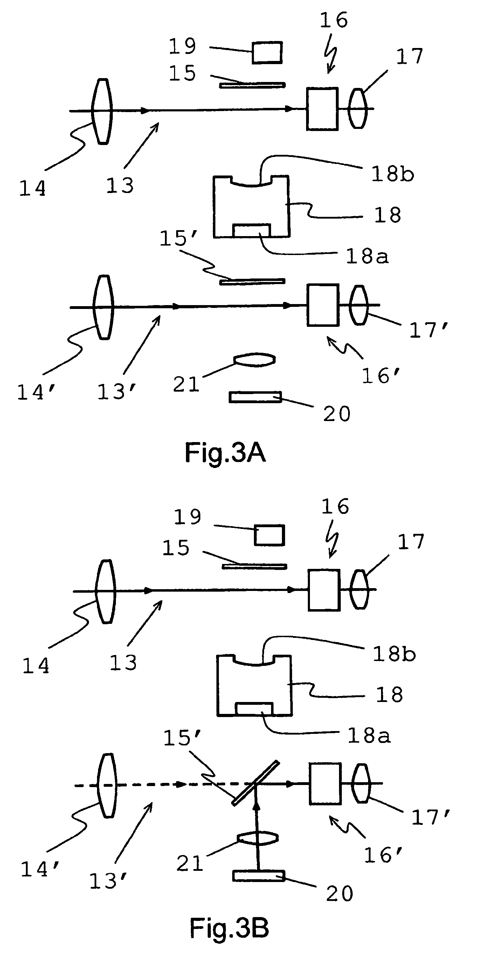

Auch in einer Tagsicht-Stellung sind mit einem erfindungsgemässen Beobachtungsgerät mehrere mögliche Funktionen wählbar. Fig. 3A zeigt das Gerät in der Ausführungsform der Figuren 2A und 2B in Tagsicht-Stellung zur reinen Beobachtung. Die Umlenkmittel - der erste und zweite Umlenkspiegel 15,15' - sind "deaktiviert", sie sind aus dem ersten und zweiten Beobachtungskanal 13,13' bewegt (eingeklappt). Mit dieser Positionierung der Umlenkmittel ausserhalb der jeweiligen Beobachtungskanäle ist das Beobachtungsgerät wie ein einfaches Fernglas zur Beobachtung verwendbar. Wünscht der Anwender eine weitere Funktion des Fernglases, so kann er die erfindungsgemäss integrierten Module aktivieren. Je nach Bedarf kann dabei eine Kamera, eine Sendeeinrichtung, ein Display, etc. in das Gerät eingegliedert werden. In Fig. 3A sind das graphische Display 20 und der Lasersender 19 aus Figur 2A dargestellt.

Fig. 3B zeigt das erfindungsgemässe Beobachtungsgerät mit aktiviertem zweitem Modul. Mittels Knopfdruck/-drehung ist der zweite Umlenkspiegel 15' in den zweiten Beobachtungskanal 13' ausgeklappt. Dadurch ist nun eine einäugige Beobachtung über den ersten Beobachtungskanal 13 und eine Betrachtung eines vom graphischen Display 20 als zweitem Modul in den zweiten Beobachtungskanal 13' eingespielten Bildes möglich. Haben das Beobachtungs- und das Display- Bild denselben Abbildungsmassstab, kann in der Betrachtung durch den Beobachter ein sozusagen fusioniertes Bild entstehen. Der Beobachter kann also z.B. ein Kamerabild mit dem direkt beobachteten Bild überlagern. Um das Beobachtungsbild - z.B. - dem Kamerabild derselben Szene zu überlagern, ist eine Kamera mit dem Beobachtungsgerät derart gekoppelt, dass die optischen Achsen von Kamera und Beobachtungsgerät in dieselbe Richtung zeigen.

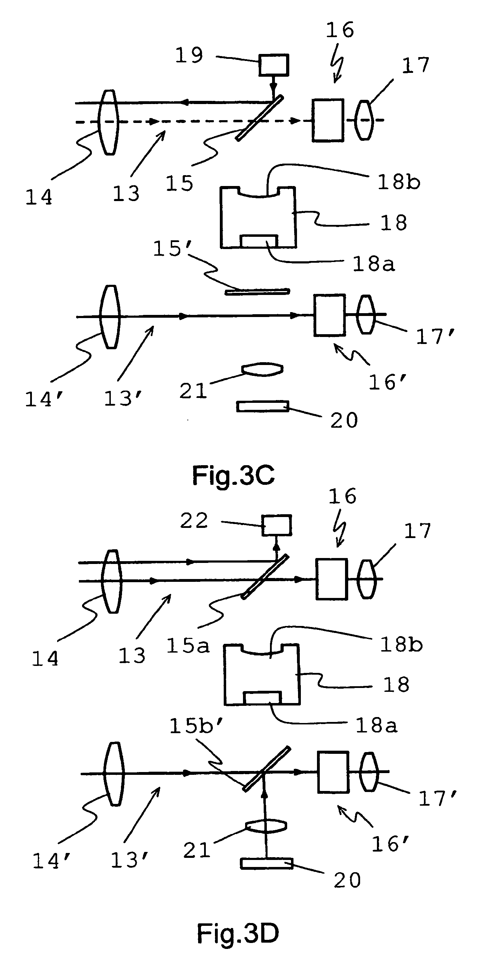

In Fig. 3C ist das zweite Modul deaktiviert, dafür ist der Lasersender 19 als erstes Modul durch den in den ersten Beobachtungskanal 13 gestellten ersten Umlenkspiegel 15 in Betrieb. So kann beispielsweise ein Signal in der in Fig. 1D gezeigten Art ausgesandt werden, eine Beobachtungstätigkeit erfolgt über den zweiten Beobachtungskanal 13'. Mit einem für z.B. den sichtbaren Wellenlängenbereich durchlässigen ersten Umlenkmittel wäre auch eine Beobachtung über den ersten Beobachtungskanal 13 - und damit eine zweiäugige Beobachtung - möglich. Anstelle des Senders ist genauso (analog zu Fig. 2B) eine Kamera - für Tagsicht-Beobachtung insbesondere eine CCD-Kamera - zum Empfang von über die erste Objektiveinheit 14 eingesammeltem Licht einsetzbar. Je nach Verwendungszweck kann so zwischen Modulen gewechselt werden, z.B. durch Ein- und Ausschalten der Module über Tasten/Bedienknöpfe oder durch Auswechseln von Modulen. So können anstelle der beispielhaft erwähnten Kamera- Display- und Lasersender-Module genauso andere optische Baugruppen - beispielsweise für Spezialanwendungen ausgebildete Spezialmodule - erfindungsgemäss mit dem Beobachtungsgerät (oder Beobachtungs-Messgerät) kombiniert und verwendet werden. Durch diese Möglichkeit der Mehrfachfunktion wird ein äusserst vielseitig einsetzbares Beobachtungsgerät bereitgestellt, welches nichtsdestotrotz kompakt, leicht, handlich und einfach zu bedienen ist. Die erfindungsgemässe Ausbildung kann sowohl auf einfache Feldstecher, als auch auf komplizierte Hochleistungsferngläser, kombinierte Beobachtungs-Messgeräte (z.B. Fernglas mit integriertem Entfernungsmesser und/oder Kompass, etc.), Präzisionsmessinstrumente, usw. angewendet werden.

Fig. 3D zeigt den optischen Aufbau einer Ausführungsform eines erfindungsgemässen Beobachtungsgeräts, in welcher Ausführungsform das zweite Umlenkmittel als beidseitig beschichtetes zweites Umlenkelement 15b' und das erste Umlenkmittel als für einen vorgegebenen Wellenlängenbereich - hier im Wesentlichen für den sichtbaren Bereich des elektromagnetischen Spektrums - teildurchlässiges erstes Umlenkelement 15a ausgebildet ist. Als erstes Modul ist eine Kamera 22 ins Gerät integriert. Mittels der ersten Objektiveinheit 14 eingesammelte Strahlen werden über das erste Umlenkelement 15a einerseits Strahlen als Empfangsstrahlen aus dem ersten Empfangskanal 13 zur Kamera 22 gelenkt und andererseits Strahlen zur ersten Okulareinheit 17 durchgelassen. Damit ist die Modulfunktion trotz gleichzeitiger Beobachtungsfunktion verwendbar. Das zweite Umlenkelement 15b' ist in dieser Ausführungsform derart beschichtet, dass auf der "Objekt-Seite" über die zweite Objektiveinheit 14' eingesammelte Strahlung zum Beobachter durchgelassen wird, und auf der "Beobachter-Seite" Sendestrahlen eines graphischen Displays 20 als zweites Modul ebenfalls zum Beobachter gelenkt werden. So ist beispielsweise ein schon auf der zweiten Okulareinheit 17' überlagertes, insbesondere fusioniertes, Bild bereitstellbar. In dieser Ausführungsform könnte beispielsweise das Kamerabild des ersten Moduls auf das graphische Display 20 gespielt und zum Beobachter geleitet werden, welcher dennoch ungestört zweiäugig eine Szene beobachten kann.
Ebenso können die gewählten Beschichtungen der jeweiligen Umlenkmittel selbstverständlich zweckentsprechend gewählt sein - beispielsweise durchlässig oder reflektiv für einen Laser-Wellenlängenbereich oder Wärmebildgerät-Wellenlängenbereich.

## Patentansprüche

1. System aus
- einem Beobachtungsgerät und
- mehreren optischen Modulen,
wobei das Beobachtungsgerät aufweist:
- einen ersten Beobachtungskanal (13) zum Empfang optischer Strahlen, wobei die Strahlen über eine dem ersten Beobachtungskanal (13) zugeordnete erste Objektiv-, Umkehr- und Okulareinheit (14,16,17) als optische Bauteile ins Auge eines Beobachters projizierbar sind, und
- ein dem ersten Beobachtungskanal (13) zugeordnetes positionierbares erstes Umlenkmittel,
**dadurch gekennzeichnet, dass**
- dem Beobachtungsgerät die mehreren optischen Module zuordenbar sind, wobei zumindest eines der Module zum Aussenden von Sendestrahlen und zumindest eines der Module zum Empfangen von Empfangsstrahlen ausgebildet ist, und diese Module dem Beobachtungsgerät unterschiedliche Funktionen bereitstellen,
wobei
■ wahlweise jeweils eines der Module in eine erste Gehäuseöffnung des Beobachtungsgeräts einsetzbar und aus dieser entnehmbar ist, wobei die verschiedenen Module zur Bereitstellung unterschiedlicher Funktionen gegeneinander auswechselbar sind,
■ die Sende- bzw. Empfangsstrahlen des jeweils eingesetzten Moduls über das erste Umlenkmittel
- in den ersten Beobachtungskanal (13) bzw.
- aus dem ersten Beobachtungskanal (13) lenkbar sind, und
■ das Beobachtungsgerät und die Module so ausgebildet sind, dass bereits vorhandene optische Bauteile des Beobachtungsgeräts auch für die eingefügten Module verwendbar sind.

2. System nach Anspruch 1, **dadurch gekennzeichnet, dass** das Beobachtungsgerät einen zweiten Beobachtungskanal (13') mit zweiter Objektiv-, Umkehr- und Okulareinheit (14',16',17') und ein dem zweiten Beobachtungskanal (13') zugeordnetes zweites Umlenkmittel aufweist.

3. System nach Anspruch 1 oder 2, **dadurch gekennzeichnet, dass** das erste und/oder zweite Umlenkmittel in und aus dem ersten und/oder zweiten Beobachtungskanal (13,13') positionierbar, beispielsweise klapp- oder schwenkbar, ist.

4. System nach einem der Ansprüche 1 bis 3, **dadurch gekennzeichnet, dass** das Beobachtungsgerät eine erste und/oder zweite elektronische oder mechanische Schalteinrichtung zum Positionieren, z.B. Ein- und Ausklappen, des ersten und/oder zweiten Umlenkmittels aufweist.

5. System nach einem der Ansprüche 1 bis 4, **dadurch gekennzeichnet, dass** das erste und/oder zweite Umlenkmittel als, insbesondere klappbarer, erster und/oder zweiter Umlenkspiegel (15,15') ausgebildet ist.

6. System nach einem der Ansprüche 1 bis 5, **dadurch gekennzeichnet, dass** das erste und/oder zweite Umlenkmittel wenigstens einseitig, gegebenenfalls beidseitig, eine Beschichtung aufweist, mittels welcher Beschichtung bzw. Beschichtungen die Reflektivität und/oder Transmittivität für vorgegebene Wellenlängenbereiche erhöht oder erniedrigt wird.

7. System nach einem der Ansprüche 2 bis 6, **dadurch gekennzeichnet, dass**
- das Beobachtungsgerät eine zweite Gehäuseöffnung aufweist, in die wahlweise jeweils eines der Module einsetzbar und aus dieser entnehmbar ist,
wobei
- die Sendestrahlen des jeweils eingesetzten Moduls über das zweite Umlenkmittel in den zweiten Beobachtungskanal (13') lenkbar sind.

8. System nach einem der vorangehenden Ansprüche, **dadurch gekennzeichnet, dass** die Module jeweils ausgebildet sind als
- graphisches Display (20),
- Kamera (22), insbesondere CCD- oder CMOS-Kamera,
- Wärmebildgerät, oder
- Lasersender (19).

9. System nach einem der vorangehenden Ansprüche, **dadurch gekennzeichnet, dass** das Beobachtungsgerät als Tag- und Nachtsichtgerät ausgebildet ist.

10. System nach einem der Ansprüche 2 bis 9, **dadurch gekennzeichnet, dass** zur Verbindung von erstem und zweitem Beobachtungskanal (13,13') ein Verstärkerkanal (V) vorhanden ist.

11. System nach Anspruch 10, **dadurch gekennzeichnet, dass**
- im Verstärkerkanal (V) ein Restlichtverstärker (18) angeordnet ist und
- im zweiten Beobachtungskanal (13') empfangene optische Strahlen über das zweite Umlenkmittel, den Restlichtverstärker (18) und das erste Umlenkmittel zur ersten Okulareinheit (17) lenkbar sind.

12. System nach einem der Ansprüche 7 bis 11, **dadurch gekennzeichnet, dass**
- im ersten und/oder zweiten Beobachtungskanal (13,13') empfangene optische Strahlen als Beobachtungsbild beobachtbar sind, und
- von einem in die zweite Gehäuseöffnung eingesetzten, insbesondere als graphisches Display (20) ausgebildeten Modul ausgesandte Sendestrahlen im zweiten Beobachtungskanal (13') als Modul-Bild beobachtbar sind, wobei Beobachtungsbild und Modul-Bild denselben Abbildungsmassstab haben.

## Claims

1. System comprising
- an observation device and
- a plurality of optical modules,
the observation device having:
- a first observation channel (13) for receiving optical beams, it being possible to project the beams into the eye of an observer via, as optical components, first objective, inversion and eyepiece units (14, 16, 17) assigned to the first observation channel (13), and
- a positionable first deflection means assigned to the first observation channel (13),
**characterized in that**
- the observation device can be assigned the plurality of optical modules, at least one of the modules being designed to emit transmitted beams, and at least one of the modules being designed to receive received beams, and these modules providing the observation device with different functions,
■ it optionally being possible for respectively one of the modules to be inserted into a first housing opening of the observation device and to be removed from said opening, it being possible to interchange the various modules to provide different functions,
■ it being possible for the transmitted or received beams of the respectively used module to be directed via the first deflection means
- into the first observation channel (13) or
- from the first observation channel (13), and
■ the observation device and the modules being designed such that already existing optical components of the observation device can also be used for the inserted modules.

2. System according to Claim 1, **characterized in that** the observation device has a second observation channel (13') with second objective, inversion and eyepiece units (14', 16', 17') and a second deflection means assigned to the second observation channel (13').

3. System according to Claim 1 or 2, **characterized in that** the first and/or second deflection means can be positioned, for example can be folded or pivoted, into and out of the first and/or second observation channel (13, 13').

4. System according to one of Claims 1 to 3, **characterized in that** the observation device has a first and/or second electronic or mechanical switching device for positioning, for example folding in and out, the first and/or second deflection means.

5. System according to one of Claims 1 to 4, **characterized in that** the first and/or second deflection means are/is designed as, in particular foldable, first and/or second deflection mirrors (15, 15').

6. System according to one of Claims 1 to 5, **characterized in that** the first and/or second deflection means have/has a coating at least on one side, if appropriate on two sides, by means of which coating or coatings the reflectivity and/or transmittivity for prescribed wavelength regions are/is increased or decreased.

7. System according to one of Claims 2 to 6, **characterized in that**
- the observation device has a second housing opening in which optionally respectively one of the modules can be inserted and can be removed therefrom,
- it being possible for the transmitted beams of the respectively used module to be directed into the second observation channel (13') via the second deflection means.

8. System according to one of the preceding claims, **characterized in that** the modules are respectively designed as
- graphics display (20),
- camera (22), in particular CCD or CMOS camera,
- thermal imaging device, or
- laser transmitter (19).

9. System according to one of the preceding claims, **characterized in that** the observation device is designed as day and night vision device.

10. System according to one of Claims 2 to 9, **characterized in that** an amplifier channel (V) is present for connecting the first and second observation channels (13, 13').

11. System according to Claim 10, **characterized in that**
- a residual light amplifier (18) is arranged in the amplifier channel (V), and
- optical beams received in the second observation channel (13') can be directed to the first eyepiece unit (17) via the second deflection means, the residual light amplifier (18) and the first deflection means.

12. System according to one of Claims 7 to 11, **characterized in that**
- optical beams received in the first and/or second observation channel (13, 13') can be observed as observed image, and
- transmitted beams emitted by a module which is inserted into the second housing opening and is designed, in particular, as graphics display (20) can be observed as module image in the second observation channel (13'), observed image and module image having the same imaging scale.

## Revendications

1. Système composé d'
- un appareil d'observation, et
- de plusieurs modules optiques,
l'appareil d'observation présentant :
- un premier canal d'observation (13), pour la réception de rayons optiques, les rayons étant susceptibles d'être projetés dans l'oeil d'un observateur, par l'intermédiaire d'une première unité à objectif, inversion et oculaire (14, 16, 17), associée au premier canal d'observation (13), réalisée sous forme de composants optiques, et
- un premier moyen de renvoi positionnable, associé au premier canal d'observation (13),
**caractérisé en ce que**
- la pluralité de modules optiques est susceptible d'être associée à l'appareil d'observation, au moins l'un des modules étant réalisé pour émettre des rayons d'émission et au moins l'un des modules est réalisé pour recevoir des rayons de réception, et ces modules fournissant différentes fonctions à l'appareil d'observation,
où
• au choix, chaque fois l'un des modules est susceptible d'être inséré dans une première ouverture de boîtier de l'appareil d'observation et susceptible d'être retiré de celle-ci, les différents modules étant interchangeables entre eux, pour fournir différentes fonctions,
• les rayons d'émission ou de réception de chaque fois le module utilisé étant susceptibles d'être guidés, par l'intermédiaire du premier moyen de renvoi,
- dans le premier canal d'observation (13) et/ou
- hors du premier canal d'observation (13), et
• l'appareil d'observation et les modules sont réalisés de manière que des composants optiques, déjà existants, de l'appareil d'observation soient également utilisables pour les modules introduits.

2. Système selon la revendication 1, **caractérisé en ce que** l'appareil d'observation présente un deuxième canal d'observation (13') avec une deuxième unité à objectif, inversion et oculaire (14', 16', 17') et un deuxième moyen de renvoi associé au deuxième canal d'observation (13').

3. Système selon la revendication 1 ou 2, **caractérisé en ce que** le premier et/ou le deuxième moyen de renvoi est susceptible d'être positionné, par exemple susceptible d'être rabattu ou d'être pivoté, dans et hors le premier et/ou le deuxième canal d'observation (13, 13').

4. Système selon l'une des revendications 1 à 3, **caractérisé en ce que** l'appareil d'observation présente un premier et/ou un deuxième dispositif de commutation électronique ou mécanique, pour positionner, par exemple rétracter et déployer par basculement, le premier et/ou le deuxième moyen de renvoi.

5. Système selon l'une des revendications 1 à 4, **caractérisé en ce que** le premier et/ou le deuxième moyen de renvoi est/sont réalisé(s) sous forme de premier et/ou deuxième miroir de renvoi (15, 15'), en particulier rabattable.

6. Système selon l'une des revendications 1 à 5, **caractérisé en ce que** le premier et/ou le deuxième moyen de renvoi présente(nt), au moins sur une face, le cas échéant sur les deux faces, un revêtement, revêtement ou revêtements, au moyen duquel, ou desquels, la réflectivité et/ou transmissivité est augmentée ou abaissée pour des plages de longueurs d'ondes prédéterminées.

7. Système selon l'une des revendications 2 à 6, **caractérisé en ce que**
- l'appareil d'observation présente une deuxième ouverture de boîtier, dans laquelle au choix l'un des modules est susceptible d'être inséré et retiré de celle-ci,
où
- les rayons d'émission de chaque fois le module utilisé sont susceptibles d'être guidés dans le deuxième canal d'observation (13') par l'intermédiaire du deuxième moyen de renvoi.

8. Système selon l'une des revendications précédentes, **caractérisé en ce que** les modules sont chaque fois réalisés sous forme de :
- visuel d'affichage (20) graphique,
- caméra (22), en particulier caméra à éléments CCD ou CMOS,
- appareil d'imagerie thermique, ou
- émetteur laser (19).

9. Système selon l'une des revendications précédentes, **caractérisé en ce que** l'appareil d'observation est réalisé sous forme d'appareil de vision diurne et nocturne.

10. Système selon l'une des revendications 2 à 9, **caractérisé en ce qu'**un canal d'amplificateur (V) est prévu pour assurer la liaison du premier et du deuxième canal d'observation (13, 13').

11. Système selon la revendication 10, **caractérisé en ce qu'**
- un amplificateur de lumière résiduelle (18) est disposé dans le canal d'amplificateur (V), et
- des rayons optiques, reçus dans le deuxième canal d'observation (13'), sont susceptibles d'être guidés vers la première unité à oculaire (17), par l'intermédiaire du deuxième moyen de renvoi, de l'amplificateur de lumière résiduelle (18) et du premier moyen de renvoi.

12. Système selon l'une des revendications 7 à 11, **caractérisé en ce que**,
- des rayons optiques, reçus dans le premier et/ou deuxième canal d'observation (13, 13'), peuvent être observés sous forme d'image d'observation, et
- des rayons d'émission, envoyés par un module, inséré dans la deuxième ouverture de boîtier, réalisé en particulier sous forme de visuel d'affichage (20) graphique, peuvent être observés sous forme d'image de module, dans le deuxième canal d'observation (13'), l'image d'observation et l'image de module ayant la même échelle de représentation.
